# EUROPÄISCHE PATENTSCHRIFT

(11) **EP 3 517 333 B1**
(45) Veröffentlichungstag und Bekanntmachung des Hinweises auf die Patenterteilung: **28.10.2020**
(21) Anmeldenummer: 19153372.8
(22) Anmeldetag: 23.01.2019
(51) Int. Cl.: B60J 7/12

(54) **FALTVERDECK FÜR EIN CABRIOLET-FAHRZEUG**
FOLDING COVERING FOR A CONVERTIBLE VEHICLE
TOIT DÉCAPOTABLE POUR UN VÉHICULE CABRIOLET

(30) Priorität: 30.01.2018 DE 102018201412
(43) Veröffentlichungstag der Anmeldung: 31.07.2019
(73) Patentinhaber: Magna Car Top Systems GmbH, 74321 Bietigheim-Bissingen (DE)
(72) Erfinder: EPLI, Josef, 71706 Markgröningen (DE); HOTZY, Stefan, 71272 Renningen (DE)
(74) Vertreter: Völger, Silke Beatrix

(56) Entgegenhaltungen:
- EP-A2- 1 925 483
- DE-A1-102008 012 750
- DE-A1-102012 110 014
- DE-U1-202005 013 964

## Beschreibung

### Faltverdeck für ein Cabriolet-Fahrzeug

Die Erfindung betrifft ein Faltverdeck für ein Cabriolet-Fahrzeug.

### Stand der Technik

Moderne Cabriolet-Fahrzeuge mit einem Faltverdeck und flexiblem Verdeckbezug müssen hohe Ansprüche an Ganzjahrestauglichkeit, Geräusch- und Temperaturisolation erfüllen. Um diesen Anforderungen zu genügen sind derartige Faltverdecke in der Regel 3 lagig aufgebaut und umfassen einen äußeren Verdeckbezugstoff, eine mittlere Polster- oder auch Dämmmatte und einen zum Innenraum weisenden Innenhimmel.
Dabei gewährleistet die Polster- und Dämmmatte nicht nur eine akustische sowie thermische Isolation, sondern unterstützt auch eine schöne Formgebung des Faltverdecks.

Die Polstermatte ist als separate Lage ausgeführt und partiell an dem äußeren Verdeckbezugstoff befestigt. Hierdurch wird in der Schließstellung des Faltverdecks eine ausreichende Anlage der Polstermatte am Verdeckbezugstoff erreicht. In der Schließstellung werden der Verdeckbezugstoff sowie die Polstermatte von den Verdeckbauteilen getragen und überspannt den Fahrgastraum. Das verstellbare Faltverdeck erstreckt sich ausgehend von einem auf der Vorderseite angeordneten nicht dargestellten Windschutzscheibenrahmen in einen Heckbereich des Fahrzeugs. Das Faltverdeck 1 ist bezogen auf eine Mittelachse A symmetrisch aufgebaut.

Die Verdeckbauteile umfassen hierbei üblicherweise eine Dachkappe mit seitlich an nach hinten weisenden Endbereichen angrenzenden Dachseitenträgern, an diese schwenkbar gekoppelte C-Säulen sowie einen verschwenkbar an der Fahrzeugkarosserie angebundenen u-förmig ausgeführten Spannbügel. Der Verdeckbezugstoff ist mittels seiner hinteren Verdeckbezugstoffkante an dem Spannbügel - zur Erzielung einer ausreichenden Stoffspannung in der Schließstellung - festgelegt.

Bei der Verstellbewegung des Verdeckbezugs von der Schließstellung in die Offenstellung muss gleichzeitig sichergestellt sein, dass sich der Verdeckbezugstoff und die Polstermatte zumindest teilweise separat ablegen lassen. Weiterhin muss eine freie Einfaltmöglichkeit für den Verdeckbezugstoff in den seitlichen Bereichen zwischen C-Säule und Spannbügel gegeben sein. Erreicht wird dies dadurch, dass der Verdeckbezugstoffrand des Verdeckbezugstoffs in diesem kritischen Bereich nicht fest an den Kinematikbauteilen bzw. damit verbundenen Bauteilen angebunden ist, sondern frei und unbefestigt verläuft (Stofflose).

Dennoch muss auch in dem Bereich der Stofflose eine definierte Faltenbildung des Verdeckbezugstoffes sowie der Polstermatte bei der Verstellbewegung in die Offenstellung und eine ausreichende Abdichtung zur Karosserie und Stoffspannung in der Schließstellung erreicht werden.

Aus der DE 41 30 180 C1 ist ein Faltverdeck für Fahrzeuge bekannt, bei dem der Bereich des Verdeckbezugsstoffs der mit seiner Stoffkante nicht an zugeordneten Kinematikbauteilen festgelegt ist, an seinem Randbereich über längeneinstellbare Zugbänder festgelegt wird. Durch diese Ausführung kann eine definierte Faltenbildung des Verdeckbezugstoffes ohne unerwünschte unruhige Wellenbildung nicht erreicht werden.

Aus der DE 10 2008 012 750 A1 ist ein verstellbares Faltverdeck für ein Cabriolet Fahrzeug bekannt, welches einen äußeren Verdeckbezugstoff und eine Polstermatte aufweist. Verdeckbezugstoff und Polstermatte sind von Verdeckbauteilen getragen. Der Verdeckbezugstoff ist mittels seiner hinteren Verdeckbezugstoffkante an einem Spannbügel gehalten. Zwischen Endbereich Spannbügel und C-Säule ist der Verdeckbezug nicht angebunden und bildet eine "Stofflose".

Es ist Aufgabe der Erfindung ein Faltverdeck für ein Cabriolet-Fahrzeug derart weiterzubilden, dass in der Schließstellung das Faltverdecks auch im Bereich der Stofflose eine ausreichende Spannung des Verdeckbezugsstoffs besitzt und bei der Verstellbewegung in die Offenstellung und vice versa eine definierte Faltenbildung erreicht werden kann.

Diese Aufgabe wird durch die im Patentanspruch 1 angegebenen Merkmale gelöst.

Durch den mittig angeordneten Schwächungsbereich des Stabilisierungselementes, der eine Sollknickstelle bildet, und die Anbindung des Stabilisierungselementes über zwei Querseiten an dem Randbereich R des Verdeckbezugstoffes wird bei der Verstellbewegung des Faltverdecks von der Schließstellung in die Offenstellung eine "Zwangsfaltung" des Verdeckbezugstoffs und der Polstermatte in dem Bereich "Stofflose" erreicht. Durch die Anbindung des Stabilisierungselementes über ein Klettverschluss-System an der Polstermatte kann ein Toleranzausgleich erfolgen. Hierdurch kann eine Wellenbildung / Einfallstelle im Bereich der Stofflose vermieden werden.

Der Schwächungsbereich ist in einer bevorzugten Ausführungsform als Schlitz ausgeführt. Das Stabilisierungselement ist zur vereinfachten Herstellung als Stanzteil aus einem Kunststoffmaterial wie beispielsweise Polyethylen ausgeführt. Es dient des Weiteren zur Stabilisierung und der Formgebung des Bereichs "Stofflose". Ein weiterer Vorteil der erfindungsgemäßen Ausgestaltung kann darin gesehen werden, dass es zu keiner Abzeichnung an dem nach außen weisenden Bereich des Verdeckbezugstoffes kommt. Das Stabilierungselement ist am Randbereich verdeckt angenäht und die lösbare, längeneinstellbare Fixierung erfolgt an der innenliegenden Polstermatte.

Weiterbildungen der Erfindung sind in den abhängigen Ansprüchen, der Beschreibung sowie den Zeichnungen angegeben.

### Beschreibung der Erfindung

Die Erfindung wird nachfolgend beispielhaft unter Bezugnahme auf die beigefügten Zeichnungen beschrieben.

Es zeigen:
- Figur 1: eine Seitenansicht auf eine Dachkinematik bei geschlossenem Verdeck (Schließstellung),
- Figur 2: eine Seitenansicht auf den äußeren Verdeckbezug mit Faltenhilfe,
- Figur 3: das Detail D der Figur 2,
- Figur 4: einen vergrößerten Ausschnitt in einer perspektivischen Darstellung des äußeren Verdeckbezugstoffs, der Postermatte mit Faltenhilfe; und
- Figur 5: eine Ansicht der Faltenhilfe.

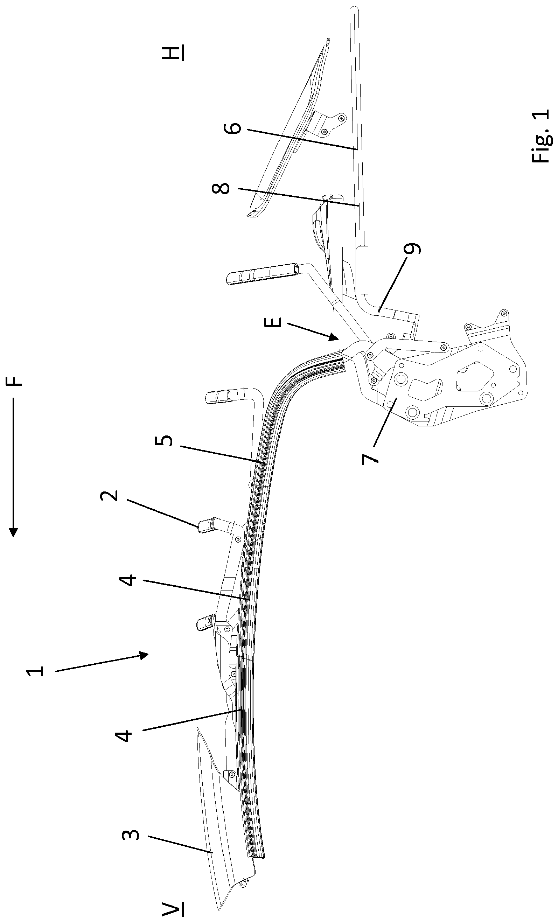

Fig. 1 zeigt in einer Seitenansicht die Verdeckbauteile einer Seite eines Faltverdecks 1 für ein Cabriolet-Fahrzeug in Schließposition. Die Fahrzeuglängsrichtung bzw. Fahrtrichtung ist mit dem Pfeil F angezeigt. Das Faltverdeck 1 kann zwischen einer einen Fahrgastraum überspannenden Schließstellung in eine zusammengefaltete Ablagestellung (Offenstellung) bewegt werden. Das Faltverdeck ist 3 lagig aufgebaut und umfasst einen äußeren Verdeckbezugstoff 10, eine mittlere Polster- oder auch Dämmmatte 11 und einen zum Innenraum weisenden Innenhimmel. Polstermatte 11 und Verdeckbezugstoff 10 bilden dabei eine schwimmende Schicht, Verdeckbezugstoff und Polstermatte werden von den Verdeckbauteilen getragen. Der Verdeckbezugstoff mit Polstermatte werden in Querrichtung im Wesentlichen von Querspriegeln 2 gestützt. Der Innenhimmel deckt auf der zum Innenraum weisenden Seite des Faltverdecks 1 die Verdeckbauteile ab. Der Verdeckbezugstoff 10 mit Polstermatte 11 sowie der Innenhimmel sind zeichnerisch in der Figur 1 nicht dargestellt. Das verstellbare Faltverdeck 1 erstreckt sich ausgehend von einem auf der Vorderseite V angeordneten nicht dargestellten Windschutzscheibenrahmen in einen Heckbereich H des Fahrzeugs. Das Faltverdeck 1 ist bezogen auf eine Mittelachse A symmetrisch aufgebaut.

Die Verdeckbauteile umfassen hierbei eine Dachkappe 3 mit seitlich an nach hinten weisenden Endbereichen angrenzenden Dachseitenträgern 4, an diese schwenkbar gekoppelte C-Säulen 5 sowie einen verschwenkbar an der Fahrzeugkarosserie angebundenen u-förmig ausgeführten Spannbügel 6.
Die Dachkappe 3 grenzt mit ihrem in Fahrtrichtung weisenden, sich quer erstreckenden Bereich, an den Windschutzscheibenrahmen an. Die Dachkappe 3 ist mit seitlich nach hinten weisenden Bereichen schwenkbar an den Dachseitenträgern 4 befestigt, wobei die Schwenkbewegung mittels Lenkern und Hebeln einer Dachkinematik erfolgt. In gleicher Weise stellt sich der Antrieb zwischen den C-Säulen 5 und den Dachseitenträgern 4 dar, wobei die C-Säulen 5 mit ihrem, entgegen der Fahrtrichtung F weisenden unteren Ende E, schwenkbar an Hauptlagern 7 befestigt sind. Die Hauptlager 7 sind seitlich an der Karosserie des Cabriolet-Fahrzeugs befestigt. Im Heckbereich H des Fahrzeugs wird das Faltverdeck 1 mittels des Spannbügels 6 begrenzt. Der Spannbügel 6 ist U-förmig ausgebildet, und ist über seine seitlichen Schenkel 8 gelenkig mit Lenkern 9 verbunden, wobei die Lenker 9 jeweils am zugeordneten Hauptlager 7 schwenkbar angebunden sind, so dass der Spannbügel 6 über eine horizontale Schwenkachse aus seiner gezeigten Stellung in eine nach oben geöffnete Stellung bei der Verstellbewegung des Faltverdecks 1 geschwenkt werden kann.

Das Cabriolet-Fahrzeug weist eine nicht dargestellte Karosserie auf, auf die oberhalb einer Gürtellinie das verstellbare Faltverdeck 1 aufgesetzt ist. Der im Wesentlichen umlaufende Verdeckbezugstoffrand R kurz Rand des Faltverdecks bildet hierbei den Auflagebereich zur Fahrzeugkarosserie und ist über Dichtelemente abgedichtet.

Der Rand R ist in Fahrrichtung gesehen vorne mit einem vorderen Randbereich RV an der Dachkappe 3 angebunden, und an den Seiten über einen seitlichen Randbereich RS der Dachseitenträger und C-Säulen und über einen hinteren Randbereich RH des Spannbügels am Verdeckkastendeckel 21 oder Kofferraum oder einem anderen Karosserieteil.

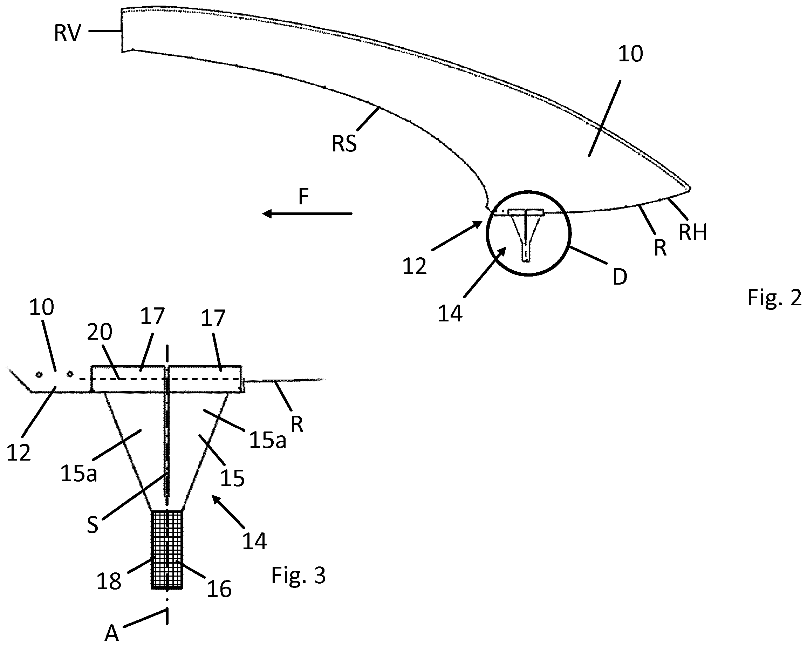

Der Verdeckbezug ist zumindest im vorderen Randbereich an der Dachkappe angebunden. Über seinen hinteren Verdeckbezugstoffrand 10a ist der Verdeckbezugstoff 10 ist in geeigneter Weise mit dem Spannbügel 6 verbunden und wird durch den Spannbügel 6 in der Schließposition gespannt. Der Verdeckbezugstoff 10 erstreckt sich ausgehend von dem Heckbereich bis in den Seitenbereich nahe der C-Säule und bildet dort einen Eckbereich 12 aus. Dieser Eckbereich 12 ist in vergrößerter Darstellung in der Figur 3 dargestellt. Wie bereits kurz dargestellt, ist der hintere Verdeckbezugstoffrand an dem Spannbügel 6 permanent angebunden und endet an den Endbereichen der seitlichen Schenkel des Spannbügels 6 benachbart zu dem Schwenkgelenk des Spannbügels 6. Im Anschluss daran verläuft der Rand in Fahrtrichtung F gesehen nach vorne bis zur C-Säule ohne direkte Befestigung. Hierdurch ergibt sich eine sogenannte "Stofflose" des Verdeckbezugstoffs 10, wodurch der in der Figur 2 gezeigte Eckbereich 12 nicht an Gestell. bzw. Kinematikbauteilen befestigt ist. Gleichermaßen ist die zum Fahrgastraum I weisende Polstermatte 11 in diesem Bereich nicht an Gestell bzw. Kinematikbauteilen angebunden.

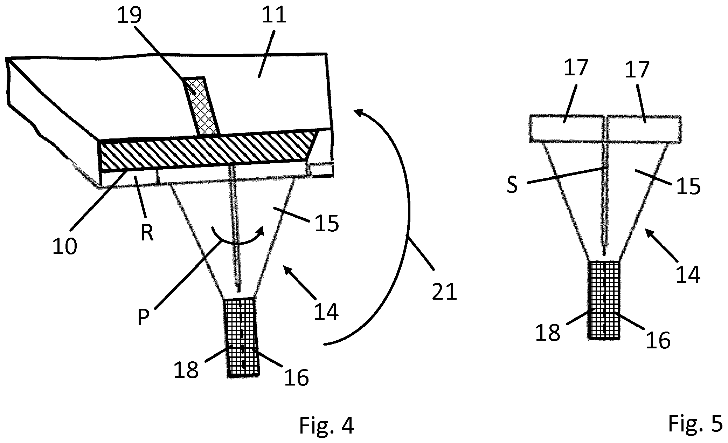

Die Figur 3 zeigt in einem in der Figur 2 angezeigten Bereich D in einer Detaildarstellung den Bereich der Stofflose des umlaufenden Randes R, der zwischen dem unteren Bereich der C-Säule E und dem Spannbügelende 8 liegt. In diesem Eckbereich ist zur Erzielung einer freien Einfaltungsmöglichkeit für den Verdeckbezug 10, der Verdeckstoffrand R nicht fest an einem formsteifen Verdeckbauteil befestigt. An dem zwischen unteren Ende der C-Säule E und Spannbügelende 8 verlaufenden Verdeckstoffrand R ist ein Stabilisierungselement 14 angebunden, welches einen v-förmigen ersten Anbindungsbereich 15 und einen bandförmigen zweiten Anbindungsbereich 16 aufweist. Das Stabilisierungselement 14 ist symmetrisch zu der Symmetrieachse A ausgeführt. Der erste Anbindungsbereich 15 ist mittig länggeschlitzt ausgeführt (Schlitz S längs der Symmetrieachse A), wodurch zwei dreieckige Anbindungselemente 15a entstehen und weist an den Anbindungselementen 15a obere Querseiten 17 auf. Das Stabilisierungselement 14 ist an den Querseiten 17 an den Randbereich R mittels einer Naht 20 angenäht. Es kann auch eine andere Befestigung der Anbindungselemente 15a an dem Rand R vorgesehen werden. Der Schlitz S verläuft ausgehend von den oberen Querseiten 17 bis annähernd zu dem zweiten Anbindungsbereich 16. Der zweite Anbindungsbereich 16 weist ein Hakenband 18 eines Klettverschluss-Systems auf. Das Klettverschluss-System umfasst ein zu dem Hakenband 18 korrespondierendes Flauschband 19. Dieses ist, wie es aus der Figur 4 zu erkennen ist, an dem gegenüberliegenden Randbereich der Polstermatte 11 fixiert. Wie es anhand des Pfeils 21 in der Darstellung der Figur 4 angedeutet ist, wird das Hakenband 18 in Richtung auf die Polstermatte 11 umgeschlagen und dort an dem Flauschband 19 lösbar festgelegt. Es ist an dieser Stelle auch eine andere lösbare und längeneinstellbare Fixierung, wie beispielsweise ein Druckknopf-System möglich.

Figur 5 zeigt das Stabilisierungselement 14 als Einzelteil, bevor es an dem Verdeckstoffrand R befestigt wird. Das Stabilisierungselement 14 ist vorzugsweise als Stanzteil ausgeführt und umfasst vorzugsweise eine Materialdicke von 2mm und ist weiterhin vorzugsweise aus einem Kunststoffmaterial wie Polyethylen hergestellt. Wie es bereits vorstehend beschrieben ist, ist das Stabilisierungselement längsgeschlitzt ausgeführt. Der Schlitz S verläuft hinsichtlich seiner Mittelachse, die der Symmetrieachse A entspricht in etwa rechtwinklig zu dem Randbereich R. Anstelle des Schlitzes S, der eine Sollknickstelle bildet, kann auch beispielsweise ein Filmscharnier ausgeführt sein.

Bei der Verstellbewegung des Faltverdecks ausgehend von der Schließstellung in die Ablagestellung wird nun der Bereich der Stofflose des Verdeckbezugstoffs 10 sowie der Polstermatte 11 im Eckbereich 12 aufgrund einer Faltung des Stabilisierungselementes um die Symmetrieachse A definiert gefaltet. Dabei wird das erste der C-Säule zugewandte Anbindungselement 15a auf das zweite Anbindungselement 15a gelegt, wodurch die Dreiecke im Wesentlichen deckungsgleich übereinander liegen. Diese Faltung ist durch den Pfleil P dargestellt.

## Patentansprüche

1. Verstellbares Faltverdeck (1) für ein Cabriolet-Fahrzeug welches zwischen einer einen Fahrgastraum überspannenden Schließstellung in eine zusammengefaltete Ablagestellung bewegt werden kann, mit einem äußeren Verdeckbezugstoff (10) und einer zum Fahrgastraum weisenden Polster- oder auch Dämmmatte (11), wobei Polstermatte (11) und Verdeckbezugstoff (10) eine schwimmende Schicht bilden, und wobei der Verdeckbezugstoff (10) und Polstermatte (11) von Verdeckbauteilen getragen sind, wobei die Verdeckbauteile zumindest eine C-Säule (5) und eine Spannbügel (6) umfassen, und wobei der Verdeckbezugstoff (10) sowie die Polstermatte (11) in ersten Bereichen an Verdeckbauteilen (5, 6) gehalten sind und wobei der Verdeckbezugstoff (10) sowie die Polstermatte (11) in einem zweiten Bereich, der sich in Fahrtrichtung F vor den Endbereichen (8) des Spannbügels (6) erstreckt einen Eckbereich bildet und der Verdeckbezugstoffrand in Fahrtrichtung F gesehen nach vorne bis zur C-Säule ohne direkte Befestigung verläuft und eine "Stofflose" bildet, **dadurch gekennzeichnet**, das im zweiten Bereich zwischen Verdeckbezugstoffrand (R) und Rand der Polstermatte (11) ein Stabilisierungselement (14) derart angebunden ist, dass es bei der Verstellbewegung von der Schließstellung des Faltverdecks (1) in die Ablagestellung eine formsteife Stabilisierung des Eckbereichs (12) sowie eine definierte Faltenbildung bewirkt, und dass das Stabilisierungselement (14) einen ersten Anbindungsbereich (15) und einen zweiten Anbindungsbereich (16) aufweist, wobei der erste Anbindungsbereich eine Sollknickstelle längs der Symmetrieachse (A) aufweist, und wobei der zweite Anbindungsbereich (16) zur lösbaren und längeneinstellbaren Anbindung an einen Befestigungsabschnitt an der Polstermatte (11) ausgeführt ist.

2. Verstellbares Faltverdeck (1) nach Anspruch 1, **dadurch gekennzeichnet, dass** die Sollknickstelle als Schlitz oder als Filmscharnier ausgeführt ist.

3. Verstellbares Faltverdeck (1) nach Anspruch 1, **dadurch gekennzeichnet, dass** der erste Anbindungsbereich v-förmig ausgeführt ist, wobei durch einen mittig ausgeführten Schlitz S zwei dreieckige Anbindungselemente (15a) entstehen, die obere Querseiten (17) aufweisen, und wobei das Stabilisierungselement (14) an den Querseiten (17) an den Randbereich (R) mittels einer Naht (20) angenäht sind.

4. Verstellbares Faltverdeck (1) nach einem der vorangehenden Ansprüche, **dadurch gekennzeichnet, dass** der zweite Anbindungsbereich (16) ein Hakenband (18) eines Klettverschluss-Systems aufweist, und wobei das Klettverschluss-System ein zu dem Hakenband (18) korrespondierendes Flauschband (19) umfasst, welches an dem Befestigungsabschnitt an dem gegenüberliegenden Randbereich der Polstermatte (11) fixiert ist.

5. Verstellbares Faltverdeck (1) nach einem der vorangehenden Ansprüche, **dadurch gekennzeichnet, dass** das Stabilisierungselement (14) als Stanzteil ausgeführt ist und vorzugsweise eine Materialdicke von 2mm aufweist.

6. Verstellbares Faltverdeck (1) nach einem der vorangehenden Ansprüche, daduch gekennzeichnet, dass das Stabilisierungselement (14) aus einem Kunststoffmaterial wie Polyethylen hergestellt ist.

## Claims

1. Adjustable folding covering (1) for a convertible vehicle, said folding covering being able to be moved between a closed position spanning a passenger compartment into a folded-together storage position, comprising an outer covering material (10) and a cushioned or else insulating mat (11) facing the passenger compartment, wherein the cushioned mat (11) and covering material (10) form a floating layer, and wherein the covering material (10) and cushioned mat (11) are supported by covering components, wherein the covering components comprise at least one C pillar (5) and a tensioning bow (6), and wherein the covering material (10) and the cushioned mat (11) are held in first regions on covering components (5, 6), and wherein the covering material (10) and the cushioned mat (11) forms a corner region in a second region which extends in front of the end regions (8) of the tensioning bow (6) in the direction of travel F, and the covering material edge runs forwards, as seen in the direction of travel F, as far as the C pillar without a direct fastening and forms a "material slack", **characterized in that** a stabilizing element (14) is attached in the second region between covering material edge (R) and edge of the cushioned mat (11) in such a manner that, during the adjustment movement from the closed position of the folding covering (1) into the storage position, said stabilizing element brings about an inherently stable stabilization of the corner region (12) and a defined formation of folds, and **in that** the stabilizing element (14) has a first attachment region (15) and a second attachment region (16), wherein the first attachment region has a predetermined buckling point along the axis of symmetry (A), and wherein the second attachment region (16) is designed for the releasable and length-adjustable attachment to a fastening portion on the padded mat (11).

2. Adjustable folding covering (1) according to Claim 1, **characterized in that** the predetermined buckling point is designed as a slot or as a film hinge.

3. Adjustable folding covering (1) according to Claim 1, **characterized in that** the first attachment region is of V-shaped design, wherein a centrally formed slot (S) produces two triangular attachment elements (15a), which have upper transverse sides (17), and wherein the stabilization element (14) is sewn at the transverse sides (17) to the edge region (R) by means of a seam (20).

4. Adjustable folding covering (1) according to one of the preceding claims, **characterized in that** the second attachment region (16) has a hook tape (18) of a touch-and-closed system, and wherein the touch-and-closed system comprises a loop tape (19) which corresponds to the hook tape (18) and is fixed at the fastening portion to the opposite edge region of the cushioned mat (11).

5. Adjustable folding covering (1) according to one of the preceding claims, **characterized in that** the stabilization element (14) is designed as a punched part and preferably has a material thickness of 2 mm.

6. Adjustable folding covering (1) according to one of the preceding claims, **characterized in that** the stabilization element (14) is produced from a plastics material, such as polyethylene.

## Revendications

1. Capote pliante réglable (1) pour un véhicule cabriolet, qui peut être déplacée entre une position de fermeture recouvrant un habitacle et une position de rangement repliée, comprenant un tissu de revêtement de capote extérieur (10) et un tapis de rembourrage ou bien d'isolation (11) orienté vers l'habitacle, le tapis de rembourrage (11) et le tissu de revêtement de capote (10) constituant une couche flottante, et le tissu de revêtement de capote (10) et le tapis de rembourrage (11) étant portés par des composants de capote, les composants de capote comprenant au moins un montant C (5) et une bride de fixation (6), et dans laquelle le tissu de revêtement de capote (10) ainsi que le tapis de rembourrage (11) sont maintenus dans des premières zones sur des composants de capote (5, 6), et dans laquelle le tissu de revêtement de capote (10) ainsi que le tapis de rembourrage (11) forment une zone d'angle dans une deuxième zone qui s'étend dans le sens de la marche F avant les zones d'extrémité (8) de la bride de fixation (6), et le bord de tissu de revêtement de capote, vu dans le sens de la marche F, s'étend vers l'avant jusqu'au montant C sans fixation directe et forme un « jeu de tissu », **caractérisée en ce que** dans la deuxième zone entre le bord de tissu de revêtement de capote (R) et le bord du tapis de rembourrage (11), un élément de stabilisation (14) est attaché de telle sorte qu'il provoque une stabilisation indéformable de la zone d'angle (12) ainsi qu'une formation de pli définie lors du mouvement de réglage de la position de fermeture de la capote pliante (1) à la position de rangement, et **en ce que** l'élément de stabilisation (14) présente une première zone d'attache (15) et une deuxième zone d'attache (16), la première zone d'attache présentant un point destiné à la flexion le long de l'axe de symétrie (A), et dans laquelle la deuxième zone d'attache (16) est réalisée pour être attachée de manière amovible et réglable en longueur à une partie de fixation sur le tapis de rembourrage (11).

2. Capote pliante réglable (1) selon la revendication 1, **caractérisée en ce que** le point destiné à la flexion est réalisé sous forme de fente ou de charnière intégrée.

3. Capote pliante réglable (1) selon la revendication 1, **caractérisée en ce que** la première zone d'attache est réalisée en forme de v, dans laquelle une fente S réalisée au centre crée deux éléments d'attache triangulaires (15a) qui présentent des faces transversales supérieures (17), et dans laquelle l'élément de stabilisation (14) est cousu sur les faces transversales (17) à la zone marginale (R) au moyen d'une couture (20).

4. Capote pliante réglable (1) selon l'une quelconque des revendications précédentes, **caractérisée en ce que** la deuxième zone d'attache (16) présente une bande de crochets (18) d'un système de fermeture auto-agrippante, et dans laquelle le système de fermeture auto-agrippante comprend une bande de boucles (19) correspondant à la bande de crochets (18) et qui est fixée à la partie de fixation dans la zone marginale opposée du tapis de rembourrage (11).

5. Capote pliante réglable (1) selon l'une quelconque des revendications précédentes, **caractérisée en ce que** l'élément de stabilisation (14) est réalisé comme une pièce découpée et présente de préférence une épaisseur du matériau de 2 mm.

6. Capote pliante réglable (1) selon l'une quelconque des revendications précédentes, **caractérisée en ce que** l'élément de stabilisation (14) est fabriqué à partir d'une matière plastique, tel que le polyéthylène.
